# EUROPÄISCHE PATENTSCHRIFT

(11) **EP 2 823 971 B1**
(45) Veröffentlichungstag und Bekanntmachung des Hinweises auf die Patenterteilung: **02.08.2017**
(21) Anmeldenummer: 14174061.3
(22) Anmeldetag: 26.06.2014
(51) Int. Cl.: B60B 7/01, B60B 21/10, B60B 21/02

(54) **Deckel für eine Radfelge sowie Rad mit einem solchen Deckel**
Cover for a wheel rim, and wheel having such a cover
Couvercle pour une jante ainsi que roue dotée d'un tel couvercle

(30) Priorität: 08.07.2013 DE 102013213355
(43) Veröffentlichungstag der Anmeldung: 14.01.2015
(73) Patentinhaber: BBS GmbH, 77761 Schiltach (DE)
(72) Erfinder: Wurft, Jörg, 77761 Schiltach (DE)
(74) Vertreter: Westphal, Mussgnug & Partner Patentanwälte mbB

(56) Entgegenhaltungen:
- WO-A2-93/07012
- GB-A- 395 150
- US-A- 2 130 881

## Beschreibung

Die Erfindung betrifft ein Rad gemäß dem Oberbegriff des Anspruchs 1.

Radfelgen bekannter Räder, beispielsweise aus DE 199 57 255 C2, weisen ein Felgeninnenbett, welches in ein einem Kraftfahrzeug in einem montierten Zustand zugewandt angeordnetes Felgeninnenhorn übergeht. Die Radfelge weist mit dem Felgeninnenhorn axial innen eine umlaufende Kontur auf.

Die DE 199 57 255 C2 bildet den bekannten Gegenstand weiter, dadurch, dass Profilsegmente an der Radfelge im Bereich des Felgeninnenbetts angebracht sind, die mit der Radfelge gemeinsam eine Hohlkammer bilden.

Gemäß einem in der WO 2005/123418 vorgeschlagenen Verfahren wird in einem Bereich einer Radinnenseite eine in Umfangsrichtung zumindest abschnittsweise durchgehende Hohlkammer gebildet, die in einem Bereich des Felgeninnenbetts bzw. Felgenaußenbetts von einer Profilwand begrenzbar ist. Dabei ist die Profilwand einstückig mit der Felge ausgebildet oder es wird eine separate Profilwand zum Schaffen einer Hohlkammer in ein Profil eingesetzt.

Die US 2,130,881 A offenbart ein gattungsgemäßes Rad.

Der Erfindung liegt die Aufgabe zugrunde, ein derartiges Rad zu verbessern, insbesondere hinsichtlich Fertigungs- und/oder Montageverfahren, seiner Statik, möglichst auch hinsichtlich seines Gewichts und hinsichtlich der durch die Radfelge bzw. das Rad verursachten Abrollgeräusche. Insbesondere soll im axial inneren Bereich, also dem Kraftfahrzeug zugewandt, eine Verbesserung von vollzogenen Entwicklungsschritten erfolgen. Es geht um das Vermeiden von Luftverwirbelungen sowie um kostengünstige und ästhetisch ansprechende Lösungen. Es zählt für den Verkauf einer Felge auch der Blick auf die dem Fahrzeug zuzuwendende Seite des Rads.

Die Aufgabe wird erfindungsgemäß gelöst durch ein Rad mit den kennzeichnenden Merkmalen des Anspruchs 1.

Vorteilhafte Ausführungsformen sind in den jeweiligen Unteransprüchen angegeben.

Das erfindungsgemäße Rad hat ein Felgeninnenhorn mit einer radial inneren Wand und einer radial äußeren Wand. Beide Wände verlaufen zumindest abschnittsweise nahezu parallel nach axial innen und enden zumindest beinahe auf einer gemeinsamen Radialebene.

Ein solches Rad lässt sich auf der dem Fahrzeug zugewandten Seite zumindest teilweise verschließen, beispielsweise mit Ringabschnitten, die als Einsätze zum Abschluss der Nischen zu Kammern dienen. Solche Ausführungen können vor allem ästhetisch vorteilhaft sein.

Erfindungsgemäß ist axial innen ein Deckel die beiden Wände verbindend angeordnet.

Der Deckel verschließt erfindungsgemäß das Felgeninnenhorn bzw. einen darin ausgebildete offenen Hohlraum in axialer Richtung.

Die sich aus dem erfindungsgemäßen Aufbau ergebende Konstruktion ist wirtschaftlich darstellbar, da auf günstigere Fertigungsverfahren bzw. Materialien für die Einzelkomponenten zurückgegriffen werden kann. Ebenso können unterschiedliche Materialien für Radfelge und Deckel gewählt und kombiniert werden.

Gemäß der Erfindung ist der Deckel radial außen in die Kontur anschmiegend mit einer radial äußeren Wölbung ausgebildet. Der Deckel endet mit einem radial äußeren Ende, welches nach axial innen zum Fahrzeug hin ausgerichtet ist.

Gemäß der Erfindung weist der Deckel radial innen ein radial inneres Ende auf, welches nach axial innen zum Fahrzeug hin ausgerichtet ist.

Der Deckel ist in der Kontur wenigstens abschnittsweise anliegend in die Radfelge geklebt und / oder geschweißt.

Ein mit dem Deckel verschlossenes Rad zeichnet sich dadurch aus, dass die Sicherheit auch dann gewährleistet ist, wenn sich der Deckel aus einem Verbund mit der Radfelge lösen sollte.

Gemäß einer vorteilhaften Ausführungsform besteht der Deckel im Wesentlichen aus einem Ring. Der Ring ist radial ausgerichtet und erstreckt sich in radialer Richtung im Wesentlichen von der umlaufenden Kontur nach radial innen zu einer inneren Wand der Radfelge.

Gemäß einer weiteren vorteilhaften Ausführungsform besteht der Deckel zumindest teilweise aus Aluminium und / oder aus Kunststoff.

Gemäß einer weiteren vorteilhaften Ausführungsform sind zwischen der radial inneren Wand und der radial äußeren Wand, insbesondere in regelmäßigen Abständen verteilt über den Umfang des Rads, in radialer Richtung verlaufende Radialstege angeordnet. In dem doppelwandigen Felgeninnenhorn sind dabei Nischen ausgebildet, die mittels des Deckels zu Kammern verschließbar sind.

Nachfolgend werden unter Bezugnahme auf Figuren zwei Ausführungsbeispiele erfindungsgemäßer Radfelgen mit einem erfindungsgemäßen Deckel näher erläutert. Gleiche Bezugszeichen sind für gleiche Teile vergeben. Der besseren Übersicht halber sind nicht alle Bezugszeichen in allen Figuren eingetragen.

Es ist ein klassisches Speichendesign mit Y-förmig verlaufenden Speichenstegen gewählt, um die Erfindung zu erläutern. Erfindungsgemäß können alternativ sämtliche Arten von Radsternen oder äquivalenten Radelementen Einsatz finden.

Es zeigen:
- Figur 1: einen Schnitt durch ein erfindungsgemäßes Rad, auszugsweise, mit einem erfindungsgemäßen, an einer Radfelge befestigten Deckel nach einem ersten Ausführungsbeispiel,
- Figur 2: einen Ausschnitt aus einer perspektivischen Darstellung mit Blick von axial innen auf das in Explosionsdarstellung dargestellte Rad aus Figur 1 mit noch nicht befestigtem Deckel,
- Figur 3: eine perspektivische Ansicht gem. Fig. 2 auf ein Rad gemäß einem zweiten Ausführungsbeispiel und
- Figur 4: eine vergrößerte, perspektivische Darstellung auf das Rad aus Figur 3 ohne Deckel.

Ein gattungsgemäßes Rad besteht auch im Fall beider dargestellter Ausführungsbeispiele zunächst aus einem meist axial eher außen angeordneten Radstern 26 und einer Radfelge 20, 20', die sich von axial außen A nach axial innen I erstreckt. Das beispielhaft dargestellte Rad ist vorzugsweise ein Leichtmetallrad für Kraftfahrzeuge. Die Radfelge 20, 20' weist axial innen I ein Felgeninnenbett 21, 21' auf. Das Felgeninnenbett 21, 21' geht in Felgeninnenhorn 23, 23' über, welches in einem montierten Zustand einem Kraftfahrzeug zugewandt angeordnet ist (nicht dargestellt). Die Radfelge 20, 20' weist axial innen demnach zumindest mit dem Felgeninnenhorn 23, 23' eine umlaufende Kontur 25, 25' auf.

Ebenfalls aus dem Stand der Technik bekannt ist es, das das Felgeninnenbett 21, 21 und / oder Felgeninnenhorn 23, 23' doppelwandig auszuführen. Das Felgeninnenhorn 23, 23' hat demnach eine radial innere Wand 28, 28' und eine radial äußere Wand 27, 27'.

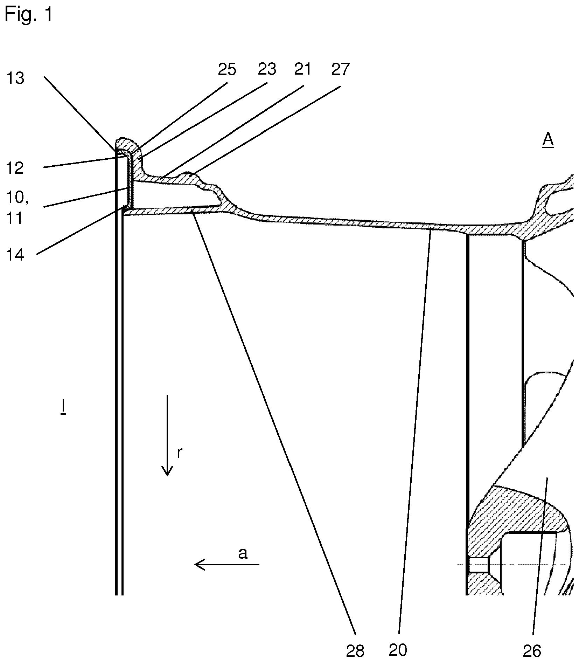

Die radial inneren und radial äußeren Wände 28, 28'; 27, 27' der in den Figuren 1 bis 4 auszugsweise dargestellten Räder verlaufen zumindest abschnittsweise parallel im Felgeninnenbett 21, 21' beginnend nach axial innen I und enden axial innen I auf einer gemeinsamen Radialebene.

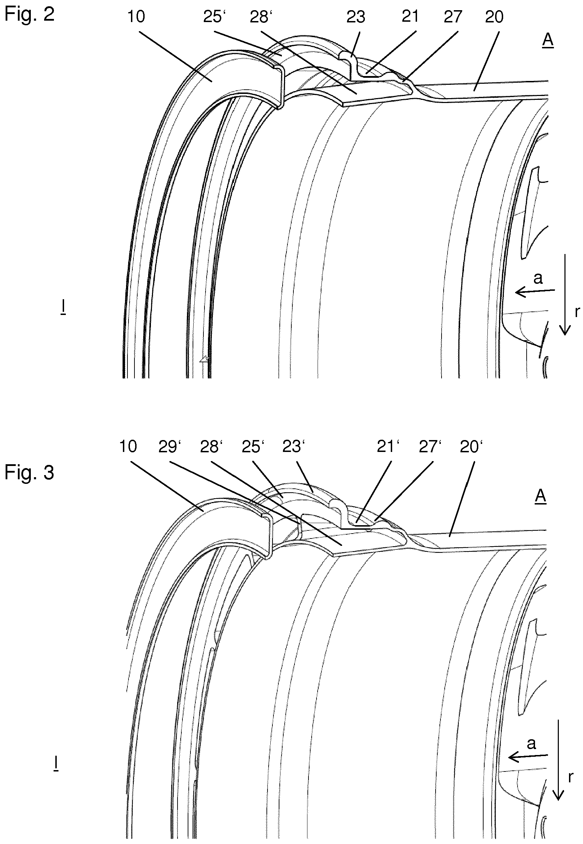

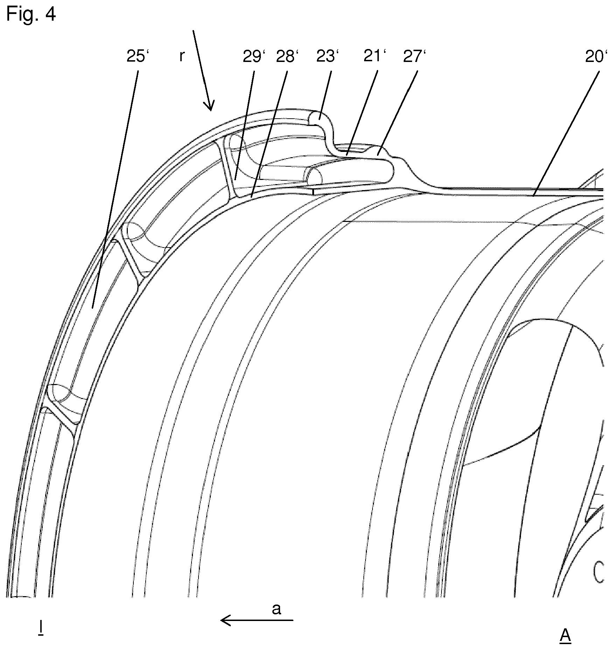

Bevorzugt ist, wie in den Figuren 1 bis 3 dargestellt, ein erfindungsgemäßer Deckel 10 in die Kontur 25, 25' eingesetzt bzw. dazu bereitgestellt (Explosionsdarstellung in den Figuren 2 und 3). Der Deckel 10 verschließt nach beiden Ausführungsbeispielen axial innen I das doppelwandig ausgeführte Felgeninnenhorn 23, 23'. Es ist gemäß erstem Ausführungsbeispiel (Figuren 1 und 2) ein einziger, umlaufender und abgeschlossener Hohlraum entstanden. Gemäß dem zweiten Ausführungsbeispiel (Figuren 3 und 4) sind über den Umfang verteilt mehrere abgeschlossene Hohlräume im Felgeninnenhorn 23' bzw. Felgeninnenbett 21' entstanden.

Gemäß dem in den Figuren 3 und 4 dargestellten zweiten Ausführungsbeispiel sind zwischen der radial inneren Wand 28' und der radial äußeren Wand 27' in regelmäßigen Abständen in Umfangsrichtung verteilt in radialer Richtung r verlaufende Radialstege 29' angeordnet. Die Radialstege 29' verbinden die beiden Wände 27', 28' bis in ihre Verzweigungsstelle hinein vollständig. Dadurch entstehen ausschließlich nach axial innen I offene Nischen, die mittels des Deckels 10 zu Kammern vollständig verschließbar sind. Die Stege können auch so ausgebildet sein, dass die Kammern nach dem Verschließen mittels des Deckels untereinander verbunden sind.

Der Deckel 10 wird dazu bevorzugt gegen die axial inneren I Enden der Wände 27, 27'; 28, 28' und ggf. (Fig. 3) die Radialstege 29' geklebt und / oder verschweißt.

Der in beiden Ausführungsbeispielen verwendete bzw. verwendbare Deckel 10 besteht im Wesentlichen aus einem radial r ausgerichteten Ring 11 mit abgerundeten Enden 13, 14. Das radial äußere Ende 13 ist mit einer radial äußeren Wölbung 12 der Kontur 25, 25' der Radfelge 20, 20' angepasst. Das radial innere Ende 14 ist ebenfalls nach axial innen I gerichtet. Im Schnitt gesehen ist der Deckel 10 bevorzugt symmetrisch gegenüber einer in axialer Richtung der Radfelge 20, 20' verlaufenden Mittelachse (nicht dargestellt) konstruiert.

Die mittels des Deckels 10 verschlossene Kammer bzw. verschlossenen Kammern können bevorzugt mit einem fluiden Medium oder mit einem Dämmmaterial befüllt werden.
Der Deckel 10 besteht bevorzugt aus Aluminium. Alternativ sind Ausführungen aus Kunststoff oder auch Materialkombinationen von Kunststoff und Metall verwendet.

### Bezugszeichenliste

- 10: Deckel
- 11: Ring
- 12: radial äußere Wölbung
- 13: radial äußeres Ende
- 14: radial inneres Ende
- 20, 20': Radfelge
- 21, 21': Felgeninnenbett
- 23, 23': Felgeninnenhorn
- 25, 25': umlaufende Kontur
- 26: Radstern
- 27, 27': radial äußere Wand
- 28, 28': radial innere Wand
- 29': Radialsteg
- a: axiale Richtung
- A: axial außen
- I: axial innen
- r: radiale Richtung

## Patentansprüche

1. Rad, insbesondere Leichtmetallrad für Kraftfahrzeuge, bestehend im Wesentlichen aus einem Radstern (26) und einer Radfelge (20, 20'), wobei die Radfelge (20, 20') ein Felgeninnenbett (21, 21') aufweist, welches in ein Felgeninnenhorn (23, 23') auf einer Radinnenseite (I) übergeht, und wobei die Radfelge (20, 20') axial innen (I) eine umlaufende Kontur (25, 25') aufweist, wobei das Felgeninnenhorn (23, 23') mit einer radial inneren Wand (28, 28') und einer radial äußeren Wand (27, 27') ausgebildet ist, die beide zumindest abschnittsweise nahezu parallel nach axial innen (I) verlaufen und zumindest beinahe auf einer gemeinsamen Radialebene enden, und das Felgeninnenhorn (23, 23') in axialer Richtung (a) mit einem Deckel (10) verschließbar ist,
**dadurch gekennzeichnet, dass**
der Deckel (10) radial außen in die Kontur (25, 25') anschmiegend mit einer radial äußeren Wölbung (12) ausgebildet ist, so dass er mit einem radial äußeren Ende (13) endet, welches nach axial innen (I) zum Fahrzeug hin ausgerichtet ist,
dass der Deckel (10) radial innen ein radial inneres Ende (14) aufweist, welches nach axial innen (I) zum Fahrzeug hin ausgerichtet ist,
dass der Deckel (10) in der Kontur (25, 25') wenigstens abschnittsweise anliegend in die Radfelge (20, 20') geklebt und / oder geschweißt ist.

2. Rad nach Anspruch 1,
**dadurch gekennzeichnet, dass** der Deckel (10)im Wesentlichen aus einem Ring (11) besteht, dass der Ring (11) radial (r) ausgerichtet ist und dass sich der Ring (11) in radialer Richtung (r) im Wesentlichen von der umlaufenden Kontur (25, 25') nach radial innen zu einer inneren Wand (28, 28') der Radfelge (20, 20') erstreckt.

3. Rad nach einem der vorangehenden Ansprüche,
**dadurch gekennzeichnet, dass**
der Deckel (10) zumindest teilweise aus Aluminium und / oder aus Kunststoff besteht.

4. Rad nach einem der vorangehenden Ansprüche,
**dadurch gekennzeichnet, dass** zwischen der radial inneren Wand (28') und der radial äußeren Wand (27'), insbesondere über den Umfang des Rads in regelmäßigen Abständen verteilt, in radialer Richtung (r) verlaufende Radialstege (29') angeordnet sind, sodass in dem doppelwandigen Felgeninnenhorn (23') Nischen ausgebildet sind, die mittels des Deckels (10) zu einzelnen oder miteinander verbundenen Kammern verschließbar sind.

## Claims

1. Wheel, in particular light-alloy wheel for motor vehicles, substantially consisting of a wheel spider (26) and a wheel rim (20, 20'), wherein the wheel rim (20, 20') has a rim inner well (21,21') which merges into a rim inner flange (23, 23') on a wheel inner side (I), and wherein the wheel rim (20, 20') has a circumferential contour (25, 25') on the axially inner side (I), wherein the rim inner flange (23, 23') is formed having a radially inner wall (28, 28') and a radially outer wall (27, 27') which both run almost parallel, at least in sections, towards the axially inner side (I) and end at least nearly on a common radial plane, and the rim inner flange (23, 23') is able to be sealed in the axial direction (a) by means of a cover (10),
**characterised in that**
the radially outer part of the cover (10) is formed to nestle into the contour (25, 25') with a radially outer curvature (12) such that it ends with a radially outer end (13) which is aligned axially inwards (I) towards the vehicle,
the radially inner part of the cover (10) has a radially inner end (14) which is aligned axially inwards (I) towards the vehicle,
the cover (10) is glued and/or welded in the wheel rim (20, 20'), said cover resting at least in sections in the contour (25, 25').

2. Wheel according to claim 1,
**characterised in that** the cover (10) substantially consists of a ring (11), the ring (11) is aligned radially (r) and the ring (11) extends in the radial direction (r) substantially from the circumferential contour (25, 25') radially inwards towards an inner wall (28, 28') of the wheel rim (20, 20').

3. Wheel according to one of the preceding claims,
**characterised in that** the cover (10) consists at least partially of aluminium and/or plastic.

4. Wheel according to one of the preceding claims,
**characterised in that** radial webs (29') running in the radial direction (r) are arranged between the radially inner wall (28') and the radially outer wall (27'), in particular distributed across the circumference of the wheel at regular intervals such that recesses are formed in the double-walled rim inner flange (23') which are able to be sealed by means of the cover (10) to form individual chambers or chambers connected to one another.

## Revendications

1. Roue, en particulier roue en métal léger destinée à des véhicules et essentiellement constituée d'une étoile de roue (26) et d'une jante de roue (20, 20'), cette jante (20, comprenant une base interne de jante (21, 21') qui se poursuit par une couronne interne de jante (23, 23') du côté interne (1) de la roue, la jante de roue (20, ayant axialement vers l'intérieur (I) un profil de révolution (25, 25'), la couronne interne de jante (23, 23') est réalisée avec une paroi radiale interne (28, 28') et une paroi radiale externe (27, 27') qui s'étendent toutes deux au moins par segments essentiellement parallèlement axialement vers l'intérieur (I) et se terminent au moins presque sur un plan radial commun, et la couronne interne de jante (23, 23') pouvant être fermée par un couvercle (10) en direction axiale (a),
**caractérisée en ce que**
le couvercle (10) est réalisé avec une courbure externe radiale (12) s'adaptant radialement à l'extérieur dans le profil (25, 25') de sorte qu'il se termine par une extrémité externe radiale (13) qui est orientée axialement vers l'intérieur (I) du véhicule,
le couvercle (10) comporte radialement vers l'intérieur, une extrémité radiale interne (14) qui est orientée axialement vers l'intérieur (I) du véhicule, et
le couvercle (10) est collé et/ou soudé à la jante de roue (20, 20') en s'appliquant au moins par segments sur le profil (25, 25').

2. Roue conforme à la revendication 1,
**caractérisée en ce que**
le couvercle (10) est essentiellement constitué par un anneau (11), cet anneau (11) étant orienté en direction radiale (r) et s'étendant en direction radiale (r) essentiellement du profil de révolution (25, 25') radialement vers l'intérieur, vers la paroi interne (28, 28') de la jante de roue (20, 20').

3. Roue conforme à l'une des revendications précédentes,
**caractérisée en ce que**
le couvercle (10) est réalisé au moins partiellement en aluminium et/ou en matériau synthétique.

4. Roue conforme à l'une des revendications précédentes,
**caractérisée en ce qu'**
entre la paroi radiale interne (28') et la paroi radiale externe (27') sont positionnées des nervures radiales (29'), en particulier réparties à égale distance sur la périphérie de la roue, et s'étendant en direction radiale (r), de façon à former, dans la couronne interne de jante (23') à double paroi, des alcôves qui peuvent être fermées au moyen du couvercle (10) pour obtenir des chambres indépendantes ou reliées les unes aux autres.
